(19) Europäisches Patentamt

European Patent Office

Office européen des brevets

(11) **EP 0 763 068 B1**

(12) **FASCICULE DE BREVET EUROPEEN**

(45) Date de publication et mention
de la délivrance du brevet:
**05.09.2001 Bulletin 2001/36**

(21) Numéro de dépôt: **95920961.0**

(22) Date de dépôt: **19.05.1995**

(51) Int Cl.⁷: **C08G 63/688**, C11D 3/37

(86) Numéro de dépôt international:
**PCT/FR95/00658**

(87) Numéro de publication internationale:
**WO 95/32997 (07.12.1995 Gazette 1995/52)**

(54) **COMPOSITIONS DETERGENTES COMPRENANT DES POLYESTERS SULFONES**

SULFONIERTE POLYESTER ENTHALTENDE WASCHMITTELZUSAMMENSETZUNGEN

DETERGENT COMPOSITIONS COMPRISING SULFONATED POLYESTERS

(84) Etats contractants désignés:
**AT BE CH DE DK ES FR GB GR IE IT LI LU MC NL PT SE**

(30) Priorité: **30.05.1994 FR 9406525**
**12.09.1994 FR 9410857**

(43) Date de publication de la demande:
**19.03.1997 Bulletin 1997/12**

(73) Titulaire: **RHODIA CHIMIE**
**92408 Courbevoie Cédex (FR)**

(72) Inventeurs:
• **DAVID, Claire**
**F-75014 Paris (FR)**
• **FLEURY, Etienne**
**F-69540 Irigny (FR)**
• **GIRARDEAU, Yvette**
**F-69270 Fontaines-sur-Saône (FR)**

(74) Mandataire: **Fabre, Madeleine-France et al**
**Rhodia Services,**
**Direction de la Propriété Industrielle,**
**40, rue de la Haie-Coq**
**93306 Aubervilliers Cedex (FR)**

(56) Documents cités:
**EP-A- 0 029 620       EP-A- 0 033 783**
**EP-A- 0 364 331       WO-A-92/04433**
**CH-A- 529 806**

• **US-A-4 877 896**

Remarques:
Le dossier contient des informations techniques
présentées postérieurement au dépôt de la
demande et ne figurant pas dans le présent
fascicule.

**Description**

La présente invention a pour objet des compositions détergentes contenant des polyesters sulfonés hydrodispersables ou hydrosolubles et l'utilisation desdits polyesters sulfonés hydrodispersables ou hydrosolubles comme agents antisalissures dans les compositions détergentes pour le lavage avec ou sans prétraitement de textiles, en fibre polyester notamment.

La demande de brevet WO 92/04433 décrit des agents antisalissures oligomères sulfonés pour composition détergente en poudre pour le lavage du linge. Ces agents sont obtenus par transestérification et oligomérisation d'un mélange de trois types de monomères présentant respectivement, une fonction sulfobenzoyle, une fonction sulfoisophtalate, une fonction téréphtalate et de l'éthylèneglycol. Le brevet US 4,877,896 décrit plus généralement des oligomères polyesters terminés par des motifs sulfoaroyles sulfonés comme agents antisalissures ("soil-release") notamment pour composition détergente en poudre pour le lavage du linge.

L'invention vise des compositions détergentes contenant de 0,01 à 10% en poids d'un polyester sulfoné hydrodispersable ou hydrosoluble susceptible d'être obtenu par estérification et/ou transestérification et polycondensation d'une composition monomère constituée de monomères diacides dicarboxyliques et d'un monomère polyol comprenant :

- un monomère diacide non sulfoné (A) constitué d'au moins un acide ou anhydride dicarboxylique choisi parmi les acides ou anhydrides téréphtalique, isophtalique et 2,6 naphtalène dicarboxylique, ou leurs diesters, en quantité correspondant à un rapport molaire (A) / (A)+(SA) de l'ordre de 95/100 à 60/100, de préférence de l'ordre de 93/100 à 65/100
- un monomère diacide sulfoné (SA) constitué d'au moins un acide ou anhydride dicarboxylique aromatique sulfoné ou aliphatique sulfoné, ou leurs diesters, en quantité correspondant à un rapport molaire (SA) / (A)+(SA) de l'ordre de 5/100 à 40/100, de préférence de l'ordre de 7/100 à 35/100

  jusqu'à 50% molaire, de préférence jusqu'à 30% molaire, de la quantité de monomère diacide non sulfoné (A) et/ou de monomère diacide sulfoné (SA) pouvant être remplacée par un monomère diacide hydroxylé (HA) constitué d'au moins un acide ou anhydride dicarboxylique aromatique ou aliphatique hydroxylé ou un diester dudit acide dicarboxylique aromatique ou aliphatique hydroxylé
- et un monomère polyol (P) constitué d'au moins un polyol choisi parmi l'éthylène glycol, le propylène glycol, le diéthylène glycol, le dipropylène glycol, le glycérol, le 1,2,4 butane triol et le 1,2,3 butane triol, selon une quantité correspondant à un rapport nombre de fonctions OH du monomère polyol (P)/nombre de fonctions ou d'équivalents fonctions COOH des monomères diacides (A)+(SA)+(HA) de l'ordre de 1,05 à 4, de préférence de l'ordre de 1,1 à 3,5, et tout particulièrement de l'ordre de 1,8 à 3 lesdit polyester sulfoné présentant

    . une masse moléculaire en nombre inférieure à 20 000, mesurée par chromatographie par perméation de gel, dans le diméthylacétamide contenant $10^{-2}$ N de LiBr, à 25°C, les résultats étant exprimés en équivalents polystyrène.
    . une teneur pondérale en soufre de l'ordre de 0,5 à 10%, de préférence de l'ordre de 1,2 à 8%
    . et une teneur en fonctions hydroxyles exprimée en équivalent OH/kg de polymère supérieure à 0,2
    . et une teneur en fonctions hydroxyles exprimée en équivalent OH/kg de polymère supérieure à 0,2.

Les teneurs en fonctions hydroxyles sont estimées par RMN du proton ; la mesure est réalisée dans le diméthylsulfoxyde.

L'entité élémentaire considérée dans la définition de la mole de monomère (A), (SA) ou (HA) est la fonction COOH dans le cas des diacides ou l'équivalent fonction COOH dans le cas des anhydrides ou des diesters.

Le monomère diacide non sulfoné (A) est de préférence constitué par 50 à 100% molaire, tout particulièrement de 70 à 90% molaire, d'acide ou anhydride téréphtalique ou d'un de ses diesters inférieurs (de méthyle, éthyle, propyle, isopropyle, butyle) et de 0 à 50% molaire, tout particulièrement de 10 à 30% molaire, d'acide ou anhydride isophtalique et/ou d'acide ou anhydride 2,6-naphtalène dicarboxylique ou d'un de leurs diesters inférieurs (de méthyle, éthyle, propyle, isopropyle, butyle) ; les diesters préférentiels sont ceux de méthyle.
Peuvent en outre être présentes dans le monomère diacide non sulfoné (A) , des quantités mineures de diacides aromatiques autres que ceux mentionnés ci-dessus, tels que l'acide orthophtalique, les acides anthracène, 1,8-naphtalène, 1,4-naphtalène, biphenyl . dicarboxyliques, ou de diacides aliphatiques tels que les acides adipique, glutarique, succinique, triméthyladipique, pimélique, azelaique, sebacique, suberique, itaconique, maleique ...sous forme acide, anhydride ou diesters inférieurs (de méthyle, éthyle, propyle, isopropyle, butyle).

Le monomère diacide sulfoné (SA) présente au moins un groupe acide sulfonique, de préférence sous la forme d'un sulfonate de métal alcalin (de sodium de préférence), et deux fonctions acides ou équivalents fonctions acides (c'est-à-dire une fonction anhydride ou deux fonctions esters) fixées sur un ou plusieurs cycles aromatiques, lorsqu'il s'agit d'acides ou anhydrides dicarboxyliques aromatiques ou de leurs diesters, ou sur la chaîne aliphatique, lorsqu'il s'agit d'acides ou anhydrides dicarboxyliques aliphatiques ou de leurs diesters.

Parmi les monomères diacides sullfonés (SA), on peut citer les acides ou anhydrides dicarboxyliques sulfonés aromatiques tels que les acides ou anhydrides sulfo-isophtaliques, sulfo-terephtaliques, sulfo-orthophtaliques, les acides ou anhydrides sulfo-4 naphtalène dicarboxylique-2,7, les sulfo-bis(hydroxycarbonyl)-4,4' diphénylsulfones, les acides ou anhydrides sulfo-diphényl-dicarboxyliques, les sulfo-bis(hydroxycarbonyl)-4,4' diphénylsulfones, les acides ou anhydrides sulfo-diphényl-dicarboxyliques, les sulfo-bis(hydroxycarbonyl)-4,4' diphénylméthanes, les acides ou anhydrides sulfo-phénoxy-5 isophtaliques, ou leurs diesters inférieurs (de méthyle, éthyle, propyle, isopropyle, butyle), et les acides ou anhydrides dicarboxyliques sulfonés aliphatiques sulfonés tels que les acides ou anhydrides sulfo-succiniques ou leurs diesters inférieurs (de méthyle, éthyle, propyle, isopropyle, butyle). Les monomères diacides sulfonés (SA) préférentiels sont les acides ou anhydrides sulfo-isophtaliques et sulfo-succiniques et leurs diesters de méthyle, et tout particulièrement le sodio-oxysulfonyl-5 isophtalate de diméthyle.

Le monomère diacide hydroxylé (HA) présente au moins un groupe hydroxyle fixé sur un ou plusieurs cycles aromatiques, lorsqu'il s'agit d'un monomère aromatique, ou sur la chaîne aliphatique, lorsqu'il s'agit d'un monomère aliphatique.

Parmi les monomères diacides hydroxylés (HA) on peut citer les acides ou anhydrides hydroxy-5 isophtalique, hydroxy-4 isophtalique, hydroxy-4 phtalique, hydroxy-2 méthylsuccinique, hydroxyméthylglutarique, hydroxyglutarique ..., ou leurs diesters inférieurs (de méthyle, éthyle, propyle, isopropyle, butyle).

Le monomère polyol (P) préférentiellement mis en oeuvre est le monoéthylène glycol et/ou le glycérol.

Lesdits polyesters sulfonés hydrosolubles et/ou hydrodispersables peuvent être obtenus par les procédés usuels d'esterification et/ou transestérification et polycondensation, par exemple par réaction d'estérification et/ou transestérification, en présence d'un catalyseur d'estérification / transestérification, du monomère polyol (P) avec les différents monomères diacides, chaque diacide étant sous la forme acide, anhydride ou sous la forme d'un de ses diesters, et polycondensation des esters de polyols à pression réduite, en présence d'un catalyseur de polycondensation.

Selon un mode préférentiel de préparation, lesdits polyesters sulfonés hydrosolubles et/ou hydrodispersables sont obtenus en réalisant les étapes successives suivantes :

- une étape de transestérification (interéchange) entre d'une part le monomère diacide sulfoné (SA), sous forme de diester, et de 50 à 100% molaire, tout particulièrement de 30 à 90% molaire de la quantité totale du monomère diacide non sulfoné (A), sous forme de diester, et d'autre part une quantité de monomère polyol (P) correspondant à un rapport nombre de fonctions OH du monomère polyol (P) / nombre d'équivalents fonctions COOH desdits monomères (A) et (SA) sous forme diesters de l'ordre de 1,05 à 4, de préférence de l'ordre de 1,1 à 3,5, et tout particulièrement de l'ordre de 1,8 à 3,0
- une étape éventuelle d'estérification entre l'éventuelle quantité restante du monomère diacide non sulfoné (A), sous forme diacide ou anhydride, et une quantité de monomère polyol (P), correspondant à un rapport nombre de fonctions OH du monomère polyol (P) / nombre de fonctions COOH du monomère diacide non sulfoné (A) sous forme diacide ou anhydride de l'ordre de 1,05 à 4, de préférence de l'ordre de 1,1 à 3,5, et tout particulièrement de l'ordre de 1,8 à 3,0
- une étape de polycondensation.

Les diesters des acides dicarboxyliques non sulfonés (A) et sulfonés (SA) mis en oeuvre à l'étape de transesterification (interéchange) , sont de préférence des diesters méthyliques.

L'étape d'interéchange est effectuée à une température supérieure ou égale à 130°C, de préférence de l'ordre 140 à 220°C et tout particulièrement de l'ordre de 180 à 220°C ; à cette température le méthanol (cas préférentiel des diesters méthyliques) formé est éliminé du milieu réactionnel de préférence par distillation. Cette opération d'interéchange est de préférence réalisée en présence d'un catalyseur de transestérification métallique, notamment d'un carboxylate métallique, tel que l'acétate de manganèse, l'acétate de zinc, l'acétate de cobalt ou l'acétate de calcium, ou d'un titanate organique ou minéral, tel que le titanate de butyle, le titanate de nitrilo-2,2',2''-triéthyle (ou aminotriéthanolate de titane) ou le titanate de calcium. Les catalyseurs préférés sont les titanates organiques ; ils sont mis en oeuvre en quantités de l'ordre d'au moins 0,001% en poids exprimé en titane, de préférence de l'ordre de 0,002% à 0,02% en poids de titane par rapport au poids de réactifs présents.

La durée de l'opération d'interéchange est de 1 à 4 heures ; elle est généralement de l'ordre de 2 à 3 heures.

Lorsque plus de 90% de la quantité théorique de méthanol a été distillée, le polyol excédentaire est éliminé en portant la température du milieu réactionnel à 230°C.

L'opération d' estérification est réalisée par ajout dans le milieu réactionnel, de la fraction restante du monomère diacide non sulfoné (A), sous forme diacide, et du monomère polyol (P), préalablement mis en suspension, à une température correspondant à celle de la fin de la température d'interéchange ; la période d'introduction est de l'ordre de 1 heure.

Cette opération d'estérification est réalisée à une température de l'ordre de 230 à 280°C, de préférence de l'ordre de 250 à 260°C, en présence d'un catalyseur du même type que celui de transestérification; les catalyseurs préférés sont les titanates organiques ; ils sont mis en oeuvre en quantités de l'ordre d'au moins 0,001% en poids exprimé en titane , de préférence de l'ordre de 0,002% à 0,02% en poids de titane par rapport au poids de réactifs introduits à l'étape d'estérification ; la réaction s'effectue avec élimination d'eau qui est soutirée du réacteur en même temps que le polyol en excès.

L'opération de polycondensation est de préférence réalisée à une température de l'ordre de 230 à 280°C, de préférence de l'ordre de 240 à 260°C, dans un autre réacteur préalablement porté à cette température et progressivement mis sous vide jusqu'à une pression qui peut aller jusqu'à 10 Pa ; une réduction de pression jusqu'à 10 millibar environ dure de l'ordre de 40 minutes.

L'opération de polycondensation se déroule avec élimination de molécules de polyol, cette opération est stoppée lorsque le couple moteur de l'arbre d'agitation indique une valeur équivalente à environ 0,5 à 5 mètres.newton pour une température de 250°C de la masse réactionnelle et une vitesse d'agitation de 80 tours / minute d'un mobile en forme d'ancre dans un réacteur de 7,5 litres ; le couplemètre utilisé est de type KYOWA, dont la gamme de mesure est comprise entre 0 et 100 mètres.newton .

Le vide est ensuite cassé à l'azote, et le polymère est coulé dans une lingotière ; après refroidissement, le polymère est broyé.

Les polyesters sulfonés préférentiels sont susceptibles d'être obtenus à partir

- d'acide téréphtalique (A1), sous forme de diester (de préférence de méthyle), et d'acide isophtalique (A2) sous forme de diacide ou d'anhydride, ou d'acide téréphtalique (A1) sous forme de diester (de préférence de méthyle), et d'un acide téréphtalique hydroxylé ou isophtalique hydroxylé (HA), sous forme de diacide ou d'anhydride, éventuellement en mélange avec de l'acide isophtalique (A2), sous forme de diacide ou d'anhydride, selon un rapport molaire (A1)/(A1)+(A2), (A1)/(A1)+(HA) ou (A1)/(A1)+(HA)+(A2) de l'ordre de 100/100 à 50/100, de préférence de l'ordre de 90/100 à 70/100 [en tant que monomère (A) ou monomères (A) et (HA)]
- d'acide sulfoisophtalique, sous forme de diester (de préférence de méthyle) [en tant que monomère (SA)]
- de monoéthylène glycol et/ou de glycérol [en tant que monomère polyol (P)]

Ils peuvent être préparés selon le procédé préférentiel ci-dessus décrit, par réalisation des étapes successives suivantes :

- une étape de transestérification (interéchange) entre d'une part le diester (de préférence de méthyle) de l'acide téréphtalique (A1) et le diester (de préférence de méthyle) de l'acide sulfoisophtalique (SA) et d'autre part du monoéthylène glycol et/ou du glycérol (P), le rapport nombre de fonctions OH de (P) / nombre d'équivalents fonctions COOH de (A1)+(SA) étant de l'ordre de 1,05 à 4, de préférence de l'ordre de 1,1 à 3,5, et tout particulièrement de l'ordre de 1,8 à 3
- une étape d'estérification entre l'acide isophtalique (A2) et/ou l'acide hydroxy iso- ou tere-phtalique (HA) et d'autre part du monoéthylène glycol et/ou du glycérol (P), le rapport nombre de fonctions OH de (P) / nombre de fonctions COOH de (A2) +/ou (HA) étant de l'ordre de 1,05 à 4, de préférence de l'ordre de 1,1 à 3,5, et tout particulièrement de l'ordre de 1,8 à 3
- une étape de polycondensation.

Lesdites compositions détergentes renferment de préférence de 0,1% à 5% et tout particulièrement de 0,2 à 3% en poids desdits poyesters sulfonés.

Lesdits polyesters sulfonés sont particulièrement intéressants dans les compositions détergentes comme agents anti-salissures et éventuellement détergents, pour le lavage avec ou sans prétraitement de textiles, notamment à base de polyesters.

Un autre objet de l'invention consiste en l'utilisation, en tant qu'agents anti-salissures dans des compositions détergentes, pour le lavage d'articles textiles notamment à base de fibres polyesters, desdits polyesters sulfonés hydrodispersables ou hydrosolubles.

Des exemples de polyesters sulfonés ont déjà été mentionnés ci-dessus; les conditions opérationnelles de préparation desdits polyesters sulfonés sont celles ou équivalentes à celles également décrites ci-dessus.

Des compositions détergentes pour le lavage d'articles textiles, notamment à base de fibres polyesters, particulièrement intéressantes au niveau de leurs propriétés écotoxicologiques, sont celles renfermant :

- de l'ordre de 0,01 à 10% en poids, de préférence de l'ordre de 0,1 à 5% en poids, tout particulièrement de l'ordre de 0,2 à 3% en poids d'un agent antisalissure polyester sulfoné hydrodispersable ou hydrosoluble ci-dessus décrit
- et de l'ordre de 3 à 40% en poids, de préférence de l'ordre de 5 à 35% en poids d'au moins un agent tensio-actif anionique choisi parmi les sulfates d'alcools aliphatiques saturés en $C_5$-$C_{24}$ éventuellement condensés avec environ 0,5 à 30 moles d'oxyde d'éthylène,

pas plus de 5% en poids de ladite composition détergente pouvant être constituée d'un autre type d'agent tensio-actif anionique aux propriétés écotoxicologiques moins intéressantes, tel que les alkylbenzènesulfonates en $C_1$-$C_{18}$.

Parmi les sulfates d'alcools éventuellement éthoxylés pouvant être mis en oeuvre, on peut mentionner les sulfates d'alcools non éthoxylés en $C_8$-$C_{18}$ (de préférence en $C_{10}$-$C_{15}$), les sulfates d'alcools gras en $C_5$-$C_{13}$ (de préférence en $C_{10}$-$C_{13}$) condensés avec environ 1 à 30 (de préférence 1 à 10 moles) d'oxyde d'éthylène, les sulfates d'alcools gras en $C_{14}$-$C_{20}$ (de préférence en $C_{14}$-$C_{18}$) condensés avec environ 4 à 30 moles (de préférence 4 à 10 moles) d'oxyde d'éthylène.

A côté desdits polyesters sulfonés de l'invention, peuvent être présents dans les compositions détergentes d'autres additifs du type de ceux décrits ci-après.

- AGENTS TENSIO-ACTIFS, en quantités correspondant à environ 3-40% en poids par rapport à la composition détergente, agents tensio-actifs tels que agents tensio-actifs anioniques

. les alkylesters sulfonates de formule R-CH($SO_3$M)-COOR', où R représente un radical alkyle en $C_{8-20}$, de préférence en $C_{10}$-$C_{16}$, R' un radical alkyle en $C_1$-$C_6$, de préférence en $C_1$-$C_3$ et M un cation alcalin (sodium, potassium, lithium), ammonium substitué ou non substitué (méthyl-, diméthyl-, triméthyl-, tetraméthylammonium, diméthylpiperidinium ...) ou dérivé d'une alcanolamine (monoéthanolamine, diéthanolamine, triéthanolamine ...). On peut citer tout particulièrement les méthyl ester sulfonates dont les radical R est en $C_{14}$-$C_{16}$;

. les alkylsulfates de formule $ROSO_3M$, où R représente un radical alkyle ou hydroxyalkyle en $C_5$-$C_{24}$, de préférence en $C_{10}$-$C_{18}$, M représentant un atome d'hydrogène ou un cation de même définition que ci-dessus, ainsi que leurs dérivés éthoxylénés (OE) et/ou propoxylénés (OP), présentant en moyenne de 0,5 à 30 motifs, de préférence de 0,5 à 10 motifs OE et/ou OP ;

. les alkylamides sulfates de formule $RCONHR'OSO_3M$ où R représente un radical alkyle en $C_2$-$C_{22}$, de préférence en $C_6$-$C_{20}$, R' un radical alkyle en $C_2$-$C_3$, M représentant un atome d'hydrogène ou un cation de même définition que ci-dessus, ainsi que leurs dérivés éthoxylénés (OE) et/ou propoxylénés (OP), présentant en moyenne de 0,5 à 60 motifs OE et/ou OP ;

. les sels d'acides gras saturés ou insaturés en $C_8$-$C_{24}$, de préférence en $C_{14}$-$C_{20}$, les alkylbenzènesulfonates en $C_9$-$C_{20}$, les alkylsulfonates primaires ou secondaires en $C_8$-$C_{22}$, les alkylglycérol sulfonates, les acides polycarboxyliques sulfonés décrits dans GB-A-1 082 179, les sulfonates de paraffine, les N-acyl N-alkyltaurates, les alkylphosphates, les iséthionates, les alkylsuccinamates les alkylsulfosuccinates, les monoesters ou diesters de sulfosuccinates, les N-acyl sarcosinates, les sulfates d'alkylglycosides, les polyéthoxycarboxylates

le cation étant un métal alcalin (sodium, potassium, lithium), un reste ammonium substitué ou non substitué (méthyl-, diméthyl-, triméthyl-, tetraméthylammonium, diméthylpiperidinium ...) ou dérivé d'une alcanolamine (monoéthanolamine, diéthanolamine, triéthanolamine ...) ; agents tensio-actifs non-ioniques

. les alkylphénols polyoxyalkylénés (polyéthoxyéthylénés, polyoxypropylénés, polyoxybutylénés) dont le substituant alkyle est en $C_6$-$C_{12}$ et contenant de 5 à 25 motifs oxyalkylènes ; à titre d'exemple, on peut citer les TRITON X-45, X-114, X-100 ou X-102 commercialisés par Rohm & Haas Cy. ;

. les glucosamide, glucamide, glycérolamide ;

. les alcools aliphatiques en $C_8$-$C_{22}$ polyoxyalkylénés contenant de 1 à 25 motifs oxyalkylènes (oxyéthylène, oxypropylène) ; à titre d'exemple, on peut citer les TERGITOL 15-S-9, TERGITOL 24-L-6 NMW commercialisés par Union Carbide Corp., NEODOL 45-9, NEODOL 23-65, NEODOL 45-7, NEODOL 45-4 commercialisés par Shell Chemical Cy., KYRO EOB commercialisé par The Procter & Gamble Cy.

. les produits résultant de la condensation de l'oxyde d'éthylène le composé résultant de la condensation de l'oxyde de propylène avec le propylène glycol, tels les PLURONIC commercialisés par BASF ;

. les produits résultant de la condensation de l'oxyde d'éthylène le composé résultant de la condensation de l'oxyde de propylène avec l'éthylènediamine, tels les TETRONIC commercialisés par BASF ;

. les oxydes d'amines tels que les oxydes d'alkyl $C_{10}$-$C_{18}$ diméthylamines, les oxydes d'alkoxy $C_8$-$C_{22}$ éthyl dihydroxy éthylamines ;

. les alkylpolyglycosides décrits dans US-A-4 565 647 ;

. les amides d'acides gras en $C_8$-$C_{20}$

. les acides gras éthoxylés

. les amides gras éthoxylés

. les amines éthoxylées

agents tensio-actifs cationiques

. les halogénures d'alkyldiméthylammonium

agents tensio-actifs amphotères et zwitterioniques

. les alkyldiméthylbétaïnes, les alkylamidopropyldiméthylbétaïnes, les alkyltriméthylsulfobétaïnes, Iles produits de condensation d'acides gras et d'hydrolysats de proteines

. les alkylamphoacétates ou alkylamphodiacétates dont le groupe alkyle contient de 6 à 20 atomes de carbone.

- ADJUVANTS AMELIORANT LES PROPRIETES DES AGENTS TENSIO-ACTIFS (AGENTS "BUILDERS"), en quantités correspondant à environ 5-50%, de preférence à environ 5-30% en poids pour les formules détergentes liquides, ou à environ 10-80%, de preférence 15-50% en poids pour les formules détergentes en poudres, agents builders tels que

adjuvants ("builders") inorganiques

. les polyphosphates (tripolyphosphates, pyrophosphates, orthophosphates, hexamétaphosphates) de métaux alcalins, d'ammonium ou d'alcanolamines

. les tetraborates ou les précurseurs de borates

. les silicates, en particulier ceux présentant un rapport $SiO_2/Na_2O$ de l'ordre de 1,6/1 à 3,2/1 et les silicates lamellaires décrits dans US-A-4 664 839

. les carbonates (bicarbonates, sesquicarbonates) alcalins ou alcalino-terreux

. les cogranulés de silicates hydratés de métaux alcalins et de carbonates de métaux alcalins (sodium ou de potassium) riches en atomes de silicium sous forme Q2 ou Q3, décrits dans EP-A-488 868

. les aminosilicates cristallins ou amorphes de métaux alcalins (sodium, potassium) ou d'ammonium, tels que les zéolithes A, P, X ... ; la zéolithe A de taille de particules de l'ordre de 0,1-10 micromètres est préférée

adjuvants ("builders") organioues

. les polyphosphonates hydrosolubles (éthane 1-hydroxy-1, 1-diphosphonates, sels de méthylène diphosphonates ...)

. les sels hydrosolubles de polymères ou de copolymères carboxyliques ou leurs sels hydrosolubles tels que

. les ethers polycarboxylates (acide oxydisuccinique et ses sels, tartrate monosuccinic acide et ses sels, tartrate disuccinic acide et ses sels

. les ethers hydroxypolycarboxylates

. l'acide citrique et ses sels, l'acide mellitique, l'acide succinique et leurs sels

. les sels d'acides polyacétiques (éthylènediaminetetraacétates, nitrilotriacétates, N-(2 hydroxyéthyl)-nitrilodiacétates)

. les acides alkyl C5-C20 succiniques et leurs sels( 2-dodécénylsuccinates, lauryl succinates,)

. les esters polyacétals carboxyliques

. l'acide polyaspartique, l'acide polyglutamique et leurs sels

. les polyimides dérivés de la polycondensation de l'acide aspartique et/ou de l'acide glutamique

. les dérivés polycarboxyméthylés de l'acide glutamique ou d'autres acides aminés

- AGENTS DE BLANCHIMENT, en quantités d'environ 0,1-20%, de préférence environ 1-10% en poids, éventuellement associés à des ACTIVATEURS DE BLANCHIMENT, en quantités d'environ 0,1-60%, de préférence d'environ 0,5-40% en poids, agents et activateurs tels que

agents de blanchiment

. les perborates tels que le perborate de sodium monohydraté ou tétrahydraté

. les composés peroxygénés tels que le carbonate de sodium peroxyhydraté, le pyrophosphate peroxyhydraté, l'urée peroxyhydratée, le peroxyde de sodium, le persulfate de de sodium

de préférence associés à un activateur de blanchiment générant in situ dans le milieu lessiviel, un peroxyacide carboxylique ; parmi ces activateurs, on peut mentionner, la tetraacetyléthylène diamine, la tetraacétyl méthylène diamine, le tetraacétyl glycoluryl, le p-acétoxybenzène sulfonate de sodium, le pentaacétyl glucose, l'octaacétyl lactose ...

. les acides percarboxyliques et leurs sels (appelés "percarbonates") tels que le monoperoxyphtalate de magnésium hexahydraté, le métachloroperbenzoate de magnésium, l'acide 4-nonylamino-4-oxoperoxybutyrique, l'acide 6-nonylamino-6-oxoperoxycaproique, l'acide diperoxydodécanedioique, le nonylamide de l'acide peroxysuccinique, l'acide décyldiperoxysuccinique.

Ces agents peuvent être associés à au moins un des agents anti-salissures ou anti-redéposition mentionnés ci-après. Peuvent également être mentionnés des agents de blanchiments non oxygénés, agissant par photoactivation en présence d'oxygène, agents tels que les phtalocyanines d'aluminium et/ou de zinc sulfonées

- AGENTS ANTI-SALISSURES autres, en quantités d'environ 0,01-10%, de préférence environ 0,1-5%, et tout particulièrement de l'ordre de 0,2-3% en poids, agents tels que

. les dérivés cellulosiques tels que les hydroxyéthers de cellulose, la méthylcellulose, l'éthylcellulose, l'hydroxypropyl méthylcellulose, l'hydroxybutyl méthylcellulose
. les polyvinylesters greffés sur des troncs polyalkylenes tels que les polyvinylacétates greffés sur des troncs polyoxyéthylènes (EP-A-219 048)
. les alcools polyvinyliques
. les copolymères polyesters à base de motifs ethylène téréphtalate et/ou propylène téréphtalate et polyoxyéthylène téréphtalate, avec un rapport molaire (nombre de motifs) ethylène téréphtalate et/ou propylène téréphalate / (nombre de motifs) polyoxyéthylène téréphtalate de l'ordre de 1/10 à 10/1, de préférence de l'ordre de 1/1 à 9/1, les polyoxyéthylène téréphtalates présentant des unités polyoxyéthylène ayant un poids moléculaire de l'ordre de 300 à 5000, de préférence de l'ordre de 600 à 5000 (US-A-3 959 230, US-A-3 893 929, US-A-4 116 896, US-A-4 702 857, US-A-4 770 666) ;
. les oligomères polyesters sulfonés obtenus par sulfonation d'un oligomère dérivé de de l'alcool allylique éthoxylé, du diméthyltéréphtalate et du 1,2 propylène diol, présentant de 1 à 4 groupes sulfonés (US-A-4 968 451)
. les copolymères polyesters à base de motifs propylène téréphtalate et polyoxyéthylène téréphtalate et terminés par des motifs éthyles, méthyles (US-A-4 711 730) ou des oligomères polyesters terminés par des groupes alkylpolyéthoxy (US-A-4 702 857) ou des groupes anioniques sulfopolyéthoxy (US-A-4 721 580), sulfoaroyles (US-A-4 877 896)

- AGENTS ANTI-REDEPOSITION autres, en quantités d'environ 0,01-10% en poids pour une composition détergente en poudre, d'environ 0,01-5%en poids pour une composition détergente liquide, agents tels que

. les monoamines ou polyamines éthoxylées, les polymères d'amines éthoxylées (US-A-4 597 898, EP-A-11 984)
. la carboxyméthylcellulose
. les oligomères polyesters sulfonés obtenus par condensation de l'acide isophtalique, du sulfosuccinate de diméthyle et de diéthylène glycol (FR-A-2 236 926)
. les polyvinylpyrollidones

- AGENTS CHELATANTS du fer et du magnésium, en quantités de l'ordre de 0,1-10%, de préférence de l'ordre de 0,1-3% en poids, agents tels que

. les aminocarboxylates tels que les éthylènediaminetétraacétates, hydroxyéthyl éthylènediaminetriacétates, nitrilotriacétates
. les aminophosphonates tels que les nitrilotris(méthylène phosphonates)
. les composés aromatiques polyfonctionnels tels que les dihydroxydisulfobenzènes

- AGENTS DISPERSANTS POLYMERIQUES, en quantité de l'ordre de 0,1-7% en poids,pour contrôler la dureté en calcium et magnésium, agents tels que

. les sels hydrosolubles d'acides polycarboxyliques de masse moléculaire de l'ordre de 2000 à 100 000, obtenus par polymérisation ou copolymérisation d'acides carboxyliques éthyléniquement insaturés tels que acide acrylique, acide ou anhydride maleique, acide fumarique, acide itaconique, acide aconitique, acide mesaconique, acide citraconique, acide méthylènemalonique , et tout particulièrement les polyacrylates de masse moléculaire de l'ordre de 2 000 à 10 000 (US-A-3 308 067), les copolymères d'acide arylique et d'anhydride maleique de masse moléculaire de l'ordre de 5 000 à 75 000 (EP-A-66 915)
. les polyéthylèneglycols de masse moléculaire de l'ordre de 1000 à 50 000

- AGENTS DE FLUORESCENCE (BRIGHTENERS), en quantité d'environ 0,05-1,2% en poids, agents tels que les dérivés de stilbène, pyrazoline, coumarine, acide fumarique, acide cinnamique, , azoles, methinecyanines, thiophènes ... ("The production and application of fluorescent brightening agents" - M. Zahradnik, publié par John Wiley & Sons, New York-1982-)

- AGENTS SUPPRESSEURS DE MOUSSES, en quantités pouvant aller jusqu'à 5% en poids, agents tels que

. les acides gras monocarboxyliques en $C_{10}$-$C_{24}$ ou leurs sels alcalins, d'ammonium ou alcanolamines, les triglycérides d'acides gras
. les hydrocarbures saturés ou insaturés aliphatiques, alicycliques, aromatiques ou hétérocycliques, tels que les paraffines, les cires
- les N-alkylaminotriazines
- les monostéarylphosphates, les monostéaryl alcool phosphates
- les huiles ou résines polyorganosiloxanes événtuellement combinées avec des particules de silice

- AGENTS ADOUCISSANTS, en quantités d'environ 0,5-10% en poids, agents tels que les argiles
- ENZYMES en quantité pouvant aller jusqu'à 5mg en poids, de préférence de l'ordre de 0,05-3mg d'enzyme active /g de composition détergente, enzymes telles que

- les protéases, amylases, lipases, cellulases, peroxydases (US-A-3 553 139, US-A-4 101 457, US-A-4 507 219, US-A-4 261 868

- AUTRES ADDITIFS tels que

- des alcools (méthanol, éthanol, propanol, isopropanol, propanediol, éthylène glycol, glycérine)
- des agents tampons
- des parfums
- des pigments

Les exemples suivants sont donnés à titre illustratif.

Exemple 1

Préparation d'un polyester sulfoné

Dans un réacteur en acier inoxydable de 7,5 litres, muni d'un agitateur à ancre tournant à 80 tours/mn relié à un couplemètre KYOWA, d'une double enveloppe pour la circulation d'un liquide caloporteur et d'une colonne de distillation régulée par une électrovanne, on introduit :

- 12,17 moles de terephtalate de diméthyle    (2363 g)
- 1,99 mole d'isophtalate de diméthyl-5 sulfonate de sodium    (590 g)
- 40,16 moles d'ethylène glycol    (2493 g)
- 54 ppm (en poids) de titane sous forme d'orthotitanate de butyle

Le mélange est préchauffé à 130°C.
Il est ensuite porté jusqu'à une température de 220°C en environ 130 minutes, pour distiller plus de 90% de la quantité théorique de méthanol.
Le mélange réactionnel est ensuite porté à 230°C en 30 minutes. Lorsque la masse réactionnelle a atteint 230°C, on commence l'introduction d'une suspension contenant :

- 2,99 moles d'acide isophtalique    (497 g)
- 8,00 moles d'éthylène glycol    (497 g)

Cette introduction est réalisée sur une période de 60 minutes tout en maintenant la masse réactionnelle à 230°C.
Le chauffage est ensuite poursuivi pour amener la masse réactionnelle à une température de 250°C en 60 minutes.
Pendant la période d'introduction du mélange d'acide isophtalique et d'éthylène glycol et la période de chauffage jusqu'à 250°C, on distille un mélange d'eau et d'éthylène glycol sans rétrogradation.
Le mélange réactionnel est ensuite transféré dans un autoclave préchauffé à 250°C, puis mis sous pression réduite pour atteindre une valeur de 10 millibar en 38 minutes, ce qui correspond à un couple moteur de 3 m.N .
La masse réactionnelle est alors coulée ; après refroidissement, on obtient un polyester dispersable dans l'eau présentant les caractéristiques suivantes :

- masse moléculaire en nombre = 10480
- taux de fonctions sulfonates : 11,6% molaire
- taux de fonctions OH : 0,48 eq/kg

Exemple 2

Préparation d'un polyester sulfoné

On répète dans les mêmes conditions opératoires, les étapes décrites à l'exemple 1 en mettant en oeuvre

- 7,99 moles de terephtalate de diméthyle        (1551g)
- 5,38 mole d'isophtalate de diméthyl-5 sulfonate de sodium        (1594g)
- 37,5 moles d'ethylène glycol        (2325g)
- 54 ppm (en poids) de titane sous forme d'orthotitanate de butyle        (1,34g)

suivi de l'introduction à 230°C d'une suspension de

- 2,00 moles d'acide isophtalique        (332,6g)
- 5,36 moles d'éthylène glycol        (332,8g)

La masse réactionnelle est coulée lorsque le couple moteur est de 3 m.N , ce qui correspond dans ce cas à une pression réduite de 100 millibar
On obtient un polyester dispersable dans l'eau de caractéristiques suivantes :

.   masse moléculaire en nombre = 9100
.   taux de fonctions sulfonates : 35% molaire
.   taux de fonctions OH : 0,39 eq/kg

Exemple 3

Préparation d'un polyester sulfoné

On répète dans les mêmes conditions opératoires, les étapes décrites à l'exemple 1 en mettant en oeuvre

- 9,04 moles de terephtalate de diméthyle        (1736g)
- 1,46 mole d'isophtalate de diméthyl-5 sulfonate de sodium        (433g)
- 29,4 moles d'ethylène glycol        (1825g)
- 54 ppm (en poids) de titane sous forme d'aminotriéthanolate de titane        (1,34g)

suivi de l'introduction à 230°C d'une suspension de

- 2,40 moles d'acide hydroxyisophtalique        (400g)
- 19,33 moles d'éthylène glycol        (1200g)

La masse réactionnelle est coulée lorsque le couple moteur est de 3 m.N , ce qui correspond dans ce cas à une pression réduite de 13 millibar
On obtient un polyester dispersable dans l'eau de caractéristiques suivantes :

.   masse moléculaire moyenne en nombre = 13310
.   taux de fonctions sulfonates : 11,3% molaire
.   taux de fonctions OH : 0,54 eq/kg

Exemple 4

Préparation d'un polyester sulfoné

On répète dans les mêmes conditions opératoires, les étapes décrites à l'exemple 1 en mettant en oeuvre

- 12,17 moles de terephtalate de diméthyle        (2363 g)
- 1,99 mole d'isophtalate de diméthyl-5 sulfonate de sodium        (590 g)
- 40,16 moles d'éthylène glycol        (2493 g)
- 54 ppm (en poids) de titane sousforme d'orthotitanate de butyle

suivi de l'introduction à 230°C d'une suspension de

- **-** 2,99 moles d'acide isophtalique    (497g)
- **-** 2,99 moles de glycérol    (275g)
- **-** 5,01 moles d'éthylène glycol    (261g)

La masse réactionnelle est coulée lorsque le couple moteur est de 3 m.N , ce qui correspond dans ce cas à une pression réduite de 13 millibar

On obtient un polyester dispersable dans l'eau de caractéristiques suivantes :

- **.** masse moléculaire moyenne en nombre = 12130
- **.** taux de fonctions sulfonates : 11,6% molaire
- **.** taux de fonctions OH : 0,41 eq/kg

Exemple 5

| Formulation d'une composition détergente lave-linge | |
|---|---|
| Composition de la lessive | parties en poids |
| - zéolithe 4A | 25 |
| - carbonate léger | 15 |
| - disilicate R2A | 5 |
| - copolymère acrylique/maleique SOKALAN CP5 (BASF) | 5 |
| - sulfate de Na | 10,7 |
| - carboxyméthylcellulose | 1 |
| - perborate monohydraté | 15 |
| - tetraacétyléthylènediamine | 5 |
| - dodécylbenzènesulfonate linéaire | 6 |
| - SYNPERONIC A3 (alcool gras en C12-C15 éthoxylé à 3 OE | 3 |
| - SYNPERONIC A9 (alcool gras en C12-C15 éthoxylé à 9 OE | 9 |
| - enzyme Esperase 4,0 T | 0,3 |
| - agent antisalissures | |

Exemple 6

PROPRIETES ANTISALISSURES

Les polymères antisalissures testés sont introduits dans la composition détergente de l'exemple 5, à raison de 1% en poids de matière active de polymère.

Test

Prélavage :

Des carrés en polyester ou polyester/coton (65/35) de dimension 10x10 cm, sont prélavés dans un TERGOTOMETRE pendant 20 minutes à 40°C, avec la formule lessivielle contenant 1% en poids de matière active de polymère testé ; l'eau utilisée présente une dureté de 30°HT ; la quantité de lessive mise en oeuvre est de 5g pour 1 litre d'eau. Les carrés de tissus sont ensuite rincés 3 fois pendant 5 minutes à l'eau froide (14°C), puis séchés par deux passages sous glaceuse.

Tachage:

On dépose 4 gouttes d'huile moteur de vidange sur 6 des carrés prélavés, et, afin d'assurer une bonne fixation de la tache, on place les tissus dans une étuve à 60°C pendant 1 heure. Pour permettre une bonne reproductibilité des résultats, les tissus sont lavés dans les 24 heures.

Lavage :

On effectue le lavage dans les mêmes conditions que le prélavage (à 40°C pendant 20 minutes, à l'aide de 5g de lessive contenant 1% de matière active de polymère antisalissure pour 1 litre d'eau de 30°HT, puis 3 rinçages de 5 minutes à l'eau froide et 2 séchages sous glaceuse)

Evaluation

La réflectance des tissus avant et après lavage est mesurée à l'aide du colorimètre DR. LANGE/LUCI 100. L'efficacité du polymère testé en tant qu'agent antisalissure, est appréciée par le % d'élimination des taches calculées par la formule

$$E \text{ en } \% = 100 \times (R3-R2)/(R1-R2)$$

R1 représentant la réflectance avant lavage du tissu non sali
R2 représentant la réflectance, avant lavage, du tissu sali
R3 représentant la réflectance, après lavage, du tissu sali

Pour chaque produit testé, on calcule la moyenne du % d'élimination des taches.
Les résultats obtenus sont donnés dans le tableau 1 suivant

| polymère | E en % |
|---|---|
| - | 10 |
| celui de l'exemple 1 | 63 |
| celui de l'exemple 2 | 80 |
| celui de l'exemple 3 | 50 |
| GEROL PS 32* | 13 |

\* polyester sulfoné hydrodispersable contenant 11,62% molaire de fonctions sulfonates et de masse moléculaire moyenne en nombre de 25000, commercialisé par RHONE-POULENC

**Exemple 7**

PROPRIETES DE DETERGENCE PRIMAIRE

Des éprouvettes des tissus standards fabriqués par le CFT (Center for test materials) suivants

- coton sébum 10D
- polyester / coton (65/35) sébum 20D
- polyester sébum 30D

éprouvettes de dimension 10x10 cm, sont lavées dans un TERGOTOMETRE pendant 20 minutes à 40°C, avec la formule lessivielle ci-dessus à laquelle est ajouté 1% en poids de matière active polymère ; l'eau utilisée présente une dureté de 30°HT.
Les tissus sont ensuite rincés 3 fois pendant 5 minutes et séchés sur glaceuse.
On mesure la réflectance des éprouvettes à l'aide d'un réflectomètre XENOCOLOR (DR LANGE), avant lavage, ainsi qu'après lavage et séchage, selon le système "L", "a" et "b" (echelle du noir au blanc, du vert au rouge et du bleu au jaune).
La valeur $\Delta E$ est calculée pour chaque type de tissu en faisant la somme géométrique des écarts de couleur $\Delta L$, $\Delta a$ et $\Delta b$ avant et après lavage sur les tissus salis, soit

$$\Delta E = (\Delta L2 + \Delta a2 + \Delta b2)1/2$$

Les résultats obtenus figurent dans le tableau suivant

| polymère | ΔE |
|---|---|
| - | 40 |
| celui de l'exemple 1 | 42 |
| celui de l'exemple 2 | 51,3 |
| celui de l'exemple 3 | 43,6 |
| GEROL PS 32 | 46,2 |

Exemple 8

| Formulation d'une composition détergente lave-linge | |
|---|---|
| Composition de la lessive | parties en poids |
| - zéolithe 4A | 25 |
| - carbonate léger | 15 |
| - disilicate R2A | 5 |
| - copolymère acrylique/maleique SOKALAN CP5 (BASF) | 5 |
| - sulfate de Na | 5,7 |
| - carboxyméthylcellulose | 1 |
| - perborate monohydraté | 15 |
| - tetraacétyléthylènediamine | 5 |
| - lauryléthersulfate éthoxylé (1 motif oxyéthylène) | 10 |
| - SYNPERONIC A3 (alcool gras en C12-C15 éthoxylé à 3 OE | 3 |
| - SYNPERONIC A9 (alcool gras en C12-C15 éthoxylé à 9 OE | 9 |
| - enzyme Esperase 4,0 T | 0,3 |
| - polymère antisalissure de l'exemple 2 | 1 |

On répète le test décrit à l'exemple 6 ; la moyenne du % d'élimination des taches E est de 75%.

Exemple 9

| Formulation d'une composition détergente lave-linge | |
|---|---|
| Composition de la lessive | parties en poids |
| - zéolithe 4A | 25 |
| - carbonate léger | 15 |
| - disilicate R2A | 5 |
| - copolymère acrylique/maleique SOKALAN CP5 (BASF) | 5 |
| - sulfate de Na | 5,7 |
| - carboxyméthylcellulose | 1 |
| - perborate monohydraté | 15 |
| - tetraacétyléthylènediamine | 5 |
| - lauryléthersulfate éthoxylé (2 motifs oxyéthylène) | 10 |
| - SYNPERONIC A3 (alcool gras en C12-C15 éthoxylé à 3 OE | 3 |
| - SYNPERONIC A9 (alcool gras en C12-C15 éthoxylé à 9 OE | 9 |
| - enzyme Esperase 4,0 T | 0,3 |
| - polymère antisalissure de l'exemple 2 | 1 |

On répète le test décrit à l'exemple 6 ; la moyenne du % d'élimination des taches E est de 71%.

**Revendications**

1. Compositions détergentes contenant de 0,01 à 10% en poids, de préférence de 0,1 à 5% en poids, tout particulièrement de 0,2 à 3% en poids d'un polyester sulfoné hydrodispersable ou hydrosoluble susceptible d'être obtenus par estérification et/ou transestérification et polycondensation d'une composition monomère constituée de monomères diacides dicarboxyliques et d'un monomère polyol comprenant :

   - un monomère diacide non sulfoné (A) constitué d'au moins un acide ou anhydride dicarboxylique choisi parmi les acides ou anhydrides téréphtalique, isophtalique et 2,6 naphtalène dicarboxylique, ou leurs diesters, en quantité correspondant à un rapport molaire (A) / (A)+(SA) de l'ordre de 95/100 à 60/100, de préférence de l'ordre de 93/100 à 65/100
   - un monomère diacide sulfoné (SA) constitué d'au moins un acide ou anhydride dicarboxylique aromatique sulfoné ou aliphatique sulfoné, ou leurs diesters, en quantité correspondant à un rapport molaire (SA) / (A)+(SA) de l'ordre de 5/100 à 40/100, de préférence de l'ordre de 7/100 à 35/100
   
   jusqu'à 50% molaire, de préférence jusqu'à 30% molaire, de la quantité de monomère diacide non sulfoné (A) et/ou de monomère diacide sulfoné (SA) pouvant être remplacée par un monomère diacide hydroxylé (HA) constitué d'au moins un acide ou anhydride dicarboxylique aromatique ou aliphatique hydroxylé ou un diester dudit acide dicarboxylique aromatique ou aliphatique hydroxylé

   - et un monomère polyol (P) constitué d'au moins un polyol choisi parmi l'éthylène glycol, le propylène glycol, le diéthylène glycol, le dipropylène glycol, le glycérol, le 1,2,4 butane triol et le 1,2,3 butane triol, selon une quantité correspondant à un rapport nombre de fonctions OH du monomère polyol (P) / nombre de fonctions ou d'équivalents fonctions COOH des monomères diacides (A)+(SA)+(HA) de l'ordre de 1,05 à 4, de préférence de l'ordre de 1,1 à 3,5, et tout particulièrement de l'ordre de 1,8 à 3 lesdits- polyesters- sulfonés- présentant

      . une masse moléculaire en nombre inférieure à 20 000, mesurée par chromatographie par perméation de gel, dans le diméthylacétamide contenant $10^{-2}$ N de LiBr, à 25°C, les résultats étant exprimés en équivalents polystyrène.
      . une teneur pondérale en soufre de l'ordre de 0,5 à 10%, de préférence de l'ordre de 1,2 à 8%
      . et une teneur en fonctions hydroxyles exprimée en équivalent OH / kg de polymère supérieure à 0,2.

2. Composition selon la revendication 1), **caractérisée en ce que** le monomère diacide non sulfoné (A) est constitué par 50 à 100% molaire d'acide ou anhydride téréphtalique ou d'un de ses diesters inférieurs et de 0 à 50% d'acide ou anhydride isophtalique et/ou d'acide ou anhydride 2,6-naphtalène dicarboxylique, ou d'un de leurs diesters inférieurs.

3. Composition selon la revendication 1) ou 2), **caractérisée en ce que** le monomère sulfoné (SA), est choisi parmi les acides ou anhydrides sulfo-isophtaliques, sulfo-terephtaliques, sulfo-orthophtaliques, les acides ou anhydrides sulfo-4 naphtalène dicarboxylique-2,7, les sulfo-bis(hydroxycarbonyl)-4,4' diphénylsulfones, les acides ou anhydrides sulfo-diphényl-dicarboxyliques, les sulfo-bis(hydroxycarbonyl)-4,4' diphénylméthanes, les acides ou anhydrides sulfo-phénoxy-5 isophtaliques, les acides ou anhydrides sulfo-succiniques, ou leurs diesters inférieurs.

4. Composition selon l'une quelconque des revendications 1) à 3), **caractérisée en ce que** le monomère diacide hydroxylé (HA) est choisi parmi les acides ou anhydrides hydroxy-5 isophtalique, hydroxy-4 isophtalique, hydroxy-4 phtalique, hydroxy-2 méthylsuccinique, hydroxyméthylglutarique, hydroxyglutarique, ou leurs diesters inférieurs.

5. Composition selon l'une quelconque des revendications 1) à 4), **caractérisée en ce que** le monomère polyol (P) est le monoéthylène glycol et/ou le glycérol.

6. Composition selon l'une quelconque des revendications 1) à 5), **caractérisée en ce que** ledit polyester sulfoné hydrosoluble ou hydrodispersable est susceptible d'être obtenu par mise en oeuvre des étapes successives suivantes :

   - une étape de transestérification (interéchange) entre d'une part le monomère diacide sulfoné (SA), sous forme de diester, et de 50 à 100% molaire, tout particulièrement de 30 à 90% molaire de la quantité totale du monomère diacide non sulfoné (A), sous forme de diester, et d'autre part une quantité de monomère polyol (P) correspondant à un rapport nombre de fonctions OH du monomère polyol (P) / nombre d'équivalents fonctions COOH desdits monomères (A) et (SA) sous forme diesters de l'ordre de 1,05 à 4, de préférence de l'ordre de 1,1 à 3,5, et tout particulièrement de l'ordre de 1,8 à 3,0

- une étape éventuelle d'estérification entre l'éventuelle quantité restante du monomère diacide non sulfoné (A), sous forme diacide ou anhydride, et une quantité de monomère polyol (P), correspondant à un rapport nombre de fonctions OH du monomère polyol (P) / nombre de fonctions COOH du monomère diacide non sulfoné (A) sous forme diacide ou anhydridede l'ordre de 1,05 à 4, de préférence de l'ordre de 1,1 à 3,5, et tout particulièrement de l'ordre de 1,8 à 3,0

- une étape de polycondensation.

7. Composition selon l'une quelconque des revendications 1) à 6), **caractérisée en ce que** ledit polyester sulfoné hydrosoluble ou hydrodispersable est susceptible d'être obtenu à partir

- d'acide téréphtalique (A1), sous forme de diester (de préférence de méthyle), et d'acide isophtalique (A2) sous forme de diacide ou d'anhydride, ou d'acide téréphtalique (A1) sous forme de diester (de préférence de méthyle), et d'un acide téréphtalique hydroxylé ou isophtalique hydroxylé (HA), sous forme de diacide ou d'anhydride, éventuellement en mélange avec de l'acide isophtalique (A2), sous forme de diacide ou d'anhydride, selon un rapport molaire (A1)/(A1)+(A2), (A1)/(A1)+(HA) ou (A1)/(A1)+(HA)+(A2) de l'ordre de 100/100 à 50/100, de préférence de l'ordre de 90/100 à 70/100

- d'acide sulfoisophtalique, sous forme de diester (de préférence de méthyle)

- de monoéthylène glycol et/ou de glycérol.

8. Composition selon l'une quelconque des revendications 1) à 7), **caractérisées en ce qu'**elles sont destinées au lavage d'articles textiles, notamment à base de polyester.

9. Utilisation, en tant qu'agents anti-salissures dans des compositions détergentes, des polyesters sulfonés hydrodispersables ou hydrosolubles définis à la revendication 1.

10. Utilisation selon la revendication 9), **caractérisée en ce que** les polyesters sulfonés hydrodispersables ou hydrosolubles sont choisis parmi ceux définis à la revandication 2.

11. Utilisation selon de revendication 9) ou 10), **caractérisé en ce que** les polyesters sulfonés hydrodispersables ou hydrosolubles sont choisis parmi ceux définis à la revandication 3.

12. Utilisation selon l'une quelconque des revendications 9) à 11), caractérisée ne ce que les polyesters sulfonés hydrodispersables ou hydrosolubles sont choisis parmi ceux définis à la revandication 4.

13. Utilisation selon l'une quelconque des revendications 9) à 12), **caractérisée en ce que** les polyesters sulfonés hydrodispersables ou hydrosolubles sont choisis parmi ceux définis à la revandication 5.

14. Utilisation selon l'une quelconque des revendications 9) à 13), caractérisée en ce lesdits lesdits polyesters sulfonés hydrosolubles ou hydrodispersables sont susceptibles d'être obtenus par mise en oeuvre des étapes successives définies à la revendication 6.

15. Utilisation selon l'une quelconque des revendications 9) à 14), **caractérisée en ce que** lesdits lesdits polyesters sulfonés hydrosolubles ou hydrodispersables choisis parmi ceux définis à la revendication 7.

16. Utilisation desdits polyesters sulfonés hydrosolubles ou hydrodispersables selon l'une quelconque des revendications 9) à 15), dans des compositions détergentes pour le lavage des textiles, notamment à base de fibres polyester.

**Patentansprüche**

1. Waschmittelzusammensetzungen, die 0,01 bis 10 Gew.-%, vorzugsweise 0,1 bis 5 Gew.-%, ganz besonders 0,2 bis 3 Gew.-% eines wasserdispergierbaren oder wasserlöslichen sulfonierten Polyesters enthalten, der durch Veresterung und/oder Umesterung und Polykondensation einer aus Dicarbonsäure-Monomeren und einem Polyol-Monomer bestehenden Monomer-Zusammensetzung erhalten werden kann, die umfaßt:

- ein nicht sulfoniertes Disäure-Monomer (A), das aus wenigstens einer Dicarbonsäure oder einem -anhydrid, ausgewählt unter den Terephthal-, Isophthal- und Naphthalin-2,6-dicarbonsäuren oder -anhydriden, oder deren Diestern, besteht, in einer Menge, die einem Molverhältnis (A) / (A)+(SA) der Größenordnung von 95/100 bis 60/100, vorzugsweise der Größenordnung von 93/100 bis 65/100 entspricht

- ein sulfoniertes Disäure-Monomer (SA), das aus wenigstens einer sulfonierten aromatischen oder aliphatischen Dicarbonsäure oder einem -anhydrid oder deren Diestern besteht, in einer Menge, die einem Molverhältnis (SA) / (A)+(SA) der Größenordnung von 5/100 bis 40/100, vorzugsweise der Größenordnung von 7/100 bis 35/100 entspricht, bis zu 50 Mol-%, vorzugsweise bis zu 30 Mol-%, wobei die Menge an nicht sulfoniertem Disäure-Monomer (A) und/oder an sulfoniertem Disäure-Monomer (SA) durch ein hydroxyliertes Disäure-Monomer (HA) ersetzt werden kann, das aus wenigstens einer hydroxylierten aromatischen oder aliphatischen Dicarbonsäure oder einem -anhydrid oder einem Diester besagter hydroxylierter aromatischer oder aliphatischer Dicarbonsäure besteht

- und ein Polyol-Monomer (P), das aus wenigstens einem Polyol, das unter Ethylenglykol, Propylenglykol, Diethylenglykol, Dipropylenglykol, Glycerin, 1,2,4-Butantriol und 1,2,3-Butantriol ausgewählt ist, besteht, gemäß einer Menge, die einem Verhältnis von Anzahl an OH-Funktionen des Polyol-Monomers (P) / Anzahl an COOH-Funktionen oder -Äquivalentfunktionen der Disäure-Monomere (A)+(SA)+(HA) der Größenordnung von 1,05 bis 4, vorzugsweise der Größenordnung von 1,1 bis 3,5 und ganz besonders der Größenordnung von 1,8 bis 3 entspricht,

wobei der sulfonierte Polyester

- ein Zahlen-Molekulargewicht kleiner als 20 000, gemessen mit Gelpermeationschromatographie in Dimethylacetamid, das $10^{-2}$ N LiBr enthält, bei 25 °C, wobei die Ergebnisse in Polystyrol-Äquivalenten ausgedrückt sind,

- einen Gewichtsgehalt an Schwefel der Größenordnung von 0,5 bis 10%, vorzugsweise der Größenordnung von 1,2 bis 8%

- und einen Gehalt an Hydroxylfunktionen, ausgedrückt als OH-Äquivalent / kg Polymer, größer als 0,2

aufweist.

2. Zusammensetzung gemäß Anspruch 1), **dadurch gekennzeichnet**, dass das nicht sulfonierte Disäure-Monomer (A) aus 50 bis 100 Mol-% Terephthalsäure oder -anhydrid oder einem ihrer niedrigen Diester und aus 0 bis 50% Isophthalsäure oder -anhydrid und/oder Naphthalin-2,6-dicarbonsäure oder -anhydrid oder einem ihrer niedrigen Diester besteht.

3. Zusammensetzung gemäß Anspruch 1) oder 2), **dadurch gekennzeichnet**, dass das sulfonierte Monomer (SA) unter den Sulfoisophthal-, Sulfoterephthal-, Sulfoorthophthalsäuren oder -anhydriden, den 4-Sulfo-naphthalin-2,7-dicarbonsäuren oder -anhydriden, den Sulfo-4,4'-bis(hydroxycarbonyl)-diphenylsulfonen, den Sulfodiphenyldicarbonsäuren oder -anhydriden, den Sulfo-4,4'-bis(hydroxycarbonyl)-diphenylmethanen, den Sulfo-5-phenoxyisophthalsäuren oder -anhydriden, den Sulfobernsteinsäuren oder -anhydriden oder deren niegrigen Diestern ausgewählt ist.

4. Zusammensetzung gemäß einem der Ansprüche 1) bis 3), **dadurch gekennzeichnet**, dass das hydroxylierte Disäure-Monomer (HA) unter den 5-Hydroxyisophthal-, 4-Hydroxyisophthal-, 4-Hydroxyphthal-, 2-Hydroxymethylbernstein-, Hydroxymethylglutar-, Hydroxyglutarsäuren oder -anhydriden oder deren niedrigen Diestern ausgewählt ist.

5. Zusammensetzung gemäß einem der Ansprüche 1) bis 4), **dadurch gekennzeichnet**, dass das Polyol-Monomer (P) Monoethylenglykol und/oder Glycerin ist.

6. Zusammensetzung gemäß einem der Ansprüche 1) bis 5), **dadurch gekennzeichnet**, dass besagter wasserlöslicher oder wasserdispergierbarer sulfonierter Polyester durch Anwendung der folgenden aufeinanderfolgenden Schritte erhalten werden kann:

- ein Schritt der Umesterung (intermolekularer Austausch) zwischen einerseits dem sulfonierten Disäure-Monomer (SA), in Diester-Form, und von 50 bis 100 Mol-%, ganz besonders von 30 bis 90 Mol-% der Gesamtmenge des nicht sulfonierten Disäure-Monomers (A), in Diester-Form, und andererseits einer Menge an Polyol-Monomer (P), die einem Verhältnis von Anzahl an OH-Funktionen des Polyol-Monomers (P) / Anzahl an COOH-Äquivalentfunktionen besagter Monomere (A) und (SA) in Diester-Form der Größenordnung von 1,05 bis 4, vorzugsweise der Größenordnung von 1,1 bis 3,5 und ganz besonders der Größenordnung von 1,8 bis 3,0 entspricht

- ein eventueller Schritt der Veresterung zwischen der eventuellen verbleibenden Menge des nicht sulfonierten Disäure-Monomers (A), in Disäure- oder Anhydrid-Form, und einer Menge an Polyol-Monomer (P), die einem Verhältnis Anzahl an OH-Funktionen des Polyol-Monomers (P) / Anzahl an COOH-Funktionen des nicht sulfonierten Disäure-Monomers (A) in Disäure- oder Anhydridform der Größenordnung von 1,05 bis 4, vorzugsweise der Größenordnung von 1,1 bis 3,5, und ganz besonders der Größenordnung von 1,8 bis 3,0 entspricht

- ein Polykondensationsschritt.

7. Zusammensetzung gemäß einem der Ansprüche 1) bis 6), **dadurch gekennzeichnet**, dass besagter wasserlöslicher oder wasserdispergierbarer sulfonierter Polyester ausgehend

- von Terephthalsäure (A1) in Diester-Form (vorzugsweise von Methyl) und Isophthalsäure (A2) in Disäure- oder Anhydrid-Form, oder von Terephthalsäure (A1) in Diester-Form (vorzugsweise von Methyl) und einer hydroxylierten Terephthal- oder hydroxylierten Isophthalsäure (HA) in Disäure- oder Anhydrid-Form, gegebenenfalls im Gemisch mit Isophthalsäure (A2) in Disäure- oder Anhydrid-Form, gemäß einem Molverhältnis (A1)/(A1)+(A2), (A1)/(A1)+(HA) oder (A1)/(A1)+(HA)+(A2) der Größenordnung von 100/100 bis 50/100, vorzugsweise der Größenordnung von 90/100 bis 70/100

- von Sulfoisophthalsäure in Diester-Form (vorzugsweise von Methyl)

- von Monoethylenglykol und/oder von Glycerin

erhalten werden kann.

8. Zusammensetzung gemäß einem der Ansprüche 1) bis 7), **dadurch gekennzeichnet**, dass sie zum Waschen von Textil-Artikeln, insbesondere auf Polyester-Basis, bestimmt ist.

9. Verwendung von in Anspruch 1 definierten wasserdispergierbaren oder wasserlöslichen sulfonierten Polyestern als Antiverschmutzungsmittel in Waschmittelzusammensetzungen.

10. Verwendung gemäß Anspruch 9, **dadurch gekennzeichnet**, dass die wasserdispergierbaren oder wasserlöslichen sulfonierten Polyester unter den in Anspruch 2 definierten ausgewählt sind.

11. Verwendung gemäß Anspruch 9 oder 10, **dadurch gekennzeichnet**, dass die wasserdispergierbaren oder wasserlöslichen sulfonierten Polyester unter den in Anspruch 3 definierten ausgewählt sind.

12. Verwendung gemäß einem der Ansprüche 9) bis 11), **dadurch gekennzeichnet**, dass die wasserdispergierbaren oder wasserlöslichen sulfonierten Polyester unter den in Anspruch 4 definierten ausgewählt sind.

13. Verwendung gemäß einem der Ansprüche 9) bis 12), **dadurch gekennzeichnet**, dass die wasserdispergierbaren oder wasserlöslichen sulfonierten Polyester unter den in Anspruch 5 definierten ausgewählt sind.

14. Verwendung gemäß einem der Ansprüche 9) bis 13), **dadurch gekennzeichnet**, dass besagte wasserlösliche oder wasserdispergierbare sulfonierte Polyester durch Anwendung der in Anspruch 6 definierten aufeinanderfolgenden Schritte erhalten werden können.

15. Verwendung gemäß einem der Ansprüche 9) bis 14), **dadurch gekennzeichnet**, dass besagte wasserlösliche oder wasserdispergierbare sulfonierte Polyester unter den in Anspruch 7 definierten ausgewählt sind.

16. Verwendung besagter wasserlöslicher oder wasserdispergierbarer sulfonierter Polyester gemäß einem der Ansprüche 9) bis 15) in Waschmittelzusammensetzungen zum Waschen von Textilien, insbesondere auf der Basis von Polyesterfasern.

**Claims**

1. Detergent compositions containing from 0.01 to 10% by weight, preferably from 0.1 to 5% by weight, very particularly from 0.2 to 3% by weight of a water-dispersible or water-soluble sulphonated polyester capable of being obtained by esterification and/or transesterification and polycondensation of a monomer composition made up of dicarboxylic diacidic monomers and of a polyol monomer, comprising:

   - an unsulphonated diacidic monomer (A) consisting of at least one dicarboxylic acid or anhydride chosen from terephthalic, isophthalic and 2,6-naphthalenedicarboxylic acids or anhydrides or their diesters, in a quantity corresponding to a molar ratio (A)/(A)+(SA) of the order of 95/100 to 60/100, preferably of the order of 93/100 to 65/100
   - a sulphonated diacidic monomer (SA) consisting of at least one sulphonated aromatic or sulphonated aliphatic dicarboxylic acid or anhydride, or their diesters, in a quantity corresponding to a molar ratio (SA)/(A)+(SA) of the order of 5/100 to 40/100, preferably of the order of 7/100 to 35/100, it being possible for up to 50 mol%, preferably up to 30 mol%, of the quantity of unsulphonated diacidic monomer (A) and/or of sulphonated diacidic monomer (SA) to be replaced with a hydroxylated diacidic monomer (HA) consisting of at least one hydroxylated aromatic or aliphatic dicarboxylic acid or anhydride or a diester of the said hydroxylated aromatic or aliphatic dicarboxylic acid
   - and a polyol monomer (P) consisting of at least one polyol chosen from ethylene glycol, propylene glycol, diethylene glycol, dipropylene glycol, glycerol, 1,2,4-butanetriol and 1,2,3-butanetriol, in a quantity corresponding to a ratio of number of OH functional groups of the polyol monomer (P)/number of COOH functional groups or functional group equivalents of the diacidic monomers (A)+(SA)+(HA) of the order of 1.05 to 4, preferably of the order of 1.1 to 3.5 and very particularly of the order of 1.8 to 3

   the said sulphonated polyester exhibiting

   - a number molecular mass lower than 20 000, measured by gel permeation chromatography in dimethylacetamide containing $10^{-2}$ N of LiBr at 25°C, the results being expressed in polystyrene equivalents,
   - a sulphur weight content of the order of 0.5 to 10 %, preferably of the order of 1.2 to 8 %
   - and a hydroxyl functional group content, expressed as OH equivalent/kg of polymer, higher than 0.2.

2. Composition according to Claim 1, **characterized in that** the unsulphonated diacidic monomer (A) consists of 50 to 100 mol% of terephthalic acid or anhydride or of one of its lower diesters and of 0 to 50 % of isophthalic acid or anhydride and/or of 2,6-naphthalenedicarboxylic acid or anhydride or of one of their lower diesters.

3. Composition according to Claim 1 or 2, **characterized in that** the sulphonated monomer (SA) is chosen from sulphoisophthalic, sulphoterephthalic, sulpho-ortho-phthalic acids or anhydrides, 4-sulpho-2,7-naphthalenedicarboxylic acids or anhydrides, sulpho-4,4'-bis(hydroxycarbonyl)diphenyl sulphones, sulphodiphenyldicarboxylic acids or anhydrides, sulpho-4,4'-bis(hydroxycarbonyl)diphenylmethanes, sulpho-5-phenoxyisophthalic acids or anhydrides, sulphosuccinic acids or anhydrides or their lower diesters.

4. Composition according to any one of Claims 1 to 3, **characterized in that** the hydroxylated diacidic monomer (HA) is chosen from 5-hydroxyisophthalic, 4-hydroxyisophthalic, 4-hydroxyphthalic, 2-hydroxymethylsuccinic, hydroxymethylglutaric and hydroxyglutaric acids or anhydrides or their lower diesters.

5. Composition according to any one of Claims 1 to 4, **characterized in that** the polyol monomer (P) is monoethylene glycol and/or glycerol.

6. Composition according to any one of Claims 1 to 5, **characterized in that** the said water-soluble or water-dispersible sulphonated polyester is capable of being obtained by carrying out the following successive stages:

   - a stage of transesterification (interchange) between, on the one hand, the sulphonated diacidic monomer (SA) in diester form and from 50 to 100 mol%, very particularly from 30 to 90 mol%, of the total quantity of the unsulphonated diacidic monomer (A), in diester form, and, on the other hand, a quantity of polyol monomer (P) corresponding to a ratio of number of OH functional groups of the polyol monomer (P)/number of COOH functional group equivalents of the said monomers (A) and (SA) in the form of diesters of the order of 1.05 to 4, preferably of the order of 1.1 to 3.5 and very particularly of the order of 1.8 to 3.0
   - an optional stage of esterification between the possible remaining quantity of the unsulphonated diacidic monomer (A), in diacid or anhydride form, and a quantity of polyol monomer (P) corresponding to a ratio of number of OH functional groups of the polyol monomer (P)/number of COOH functional groups of the unsulphonated diacidic monomer (A) in diacid or anhydride form of the order of 1.05 to 4, preferably of the order of 1.1 to 3.5 and very particularly of the order of 1.8 to 3.0

- a polycondensation stage.

7. Composition according to any one of Claims 1 to 6, **characterized in that** the said water-soluble or water-dispersible sulphonated polyester is capable of being obtained from

- terephthalic acid (A1) in (preferably methyl) diester form and isophthalic acid (A2) in the form of diacid or anhydride, or terephthalic acid (A1) in (preferably methyl) diester form and a hydroxylated terephthalic or hydroxylated isophthalic acid (HA) in the form of diacid or anhydride, optionally mixed with isophthalic acid (A2) in the form of diacid or anhydride, in an (A1)/(A1)+(A2), (A1)/(A1)+(HA) or (A1)/(A1)+(HA)+(A2) molar ratio of the order of 100/100 to 50/100, preferably of the order of 90/100 to 70/100
- sulphoisophthalic acid in (preferably methyl) diester form
- monoethylene glycol and/or glycerol.

8. Composition according to any one of Claims 1 to 7, **characterized in that** it is intended for washing textile articles, especially those based on polyester.

9. Use, as antisoiling agents in detergent compositions, of the water-dispersible or water-soluble sulphonated polyesters defined in Claim 1.

10. Use according to Claim 9, **characterized in that** the water-dispersible or water-soluble sulphonated polyesters are chosen from those defined in Claim 2.

11. Use according to Claim 9 or 10, **characterized in that** the water-dispersible or water-soluble sulphonated polyesters are chosen from those defined in Claim 3.

12. Use according to any one of Claims 9 to 11, **characterized in that** the water-dispersible or water-soluble sulphonated polyesters are chosen from those defined in Claim 4.

13. Use according to any one of Claims 9 to 12, **characterized in that** the water-dispersible or water-soluble sulphonated polyesters are chosen from those defined in Claim 5.

14. Use according to any one of Claims 9 to 13, **characterized in that** the said water-soluble or water-dispersible sulphonated polyesters are capable of being obtained by carrying out the successive steps defined in Claim 6.

15. Use according to any one of Claims 9 to 14, **characterized in that** the said water-soluble or water-dispersible sulphonated polyesters are chosen from those defined in Claim 7.

16. Use of the said water-soluble or water-dispersible sulphonated polyesters according to any one of Claims 9 to 15 in detergent compositions for washing textiles, especially those based on polyester fibres.